# EUROPÄISCHE PATENTSCHRIFT

(11) **EP 3 167 779 B1**
(45) Veröffentlichungstag und Bekanntmachung des Hinweises auf die Patenterteilung: **18.03.2020**
(21) Anmeldenummer: 15194049.1
(22) Anmeldetag: 11.11.2015
(51) Int. Cl.: A47J 37/12

(54) **ERHITZUNGSVERFAHREN ZUM ERHITZEN VON GÜTERN, INSBESONDERE LEBENSMITTELN, SOWIE EINE ERHITZUNGSVORRICHTUNG ZUR DURCHFÜHRUNG DES VERFAHRENS**
HEATING METHOD FOR HEATING GOODS, IN PARTICULAR FOODSTUFFS, AND HEATING DEVICE FOR CARRYING OUT THE METHOD
PROCÉDÉ DE CHAUFFAGE DE MARCHANDISES, EN PARTICULIER DE PRODUITS ALIMENTAIRES ET DISPOSITIF DE CHAUFFAGE DESTINÉ À EXÉCUTER LE PROCEDÉ

(43) Veröffentlichungstag der Anmeldung: 17.05.2017
(73) Patentinhaber: Neumaerker, Harald, 1210 Wien (AT); Eichinger, Alexander, 1210 Wien (AT); Scheiblauer, Oliver, 1210 Wien (AT); Neumaerker, Karin, 1210 Wien (AT)
(72) Erfinder: Neumaerker, Harald, 1210 Wien (AT); Eichinger, Alexander, 1210 Wien (AT); Scheiblauer, Oliver, 1210 Wien (AT); Neumaerker, Karin, 1210 Wien (AT)
(74) Vertreter: TBK

(56) Entgegenhaltungen:
- EP-A2- 1 647 216
- US-A- 6 067 899
- US-A1- 2005 181 102

## Beschreibung

Die Erfindung betrifft ein Erhitzungsverfahren zum Erhitzen von Gegenständen, insbesondere Lebensmitteln, sowie eine Erhitzungsvorrichtung zur Durchführung des Verfahrens.

Die Druckschrift DE 2228564 A1 offenbart ein Fördersystem für Gargut, wobei das Fördersystem mittels Mitnehmern das Gargut schonend durch ein Wasserbad fördert, um Bruchverluste des Garguts zu vermeiden.

Aus dem Dokument EP 1 647 216 A2 ist eine Erhitzungsvorrichtung bekannt, mittels der Lebensmittel gegart werden können. Bei dieser Vorrichtung wird das Gargut mittels einer Fördereinrichtung unter einem Regen von heißem Öl hindurchgefördert. Das Gargut wird entweder direkt auf einem Förderband angeordnet oder auf der Außenfläche vorgesehener Halterungen angeordnet. In vorbestimmten Abständen wird es mit heißem Öl übergossen.

Aufgabe der Erfindung ist es, ein gleichmäßigeres Erhitzen von Gegenständen, insbesondere Lebensmitteln, zu erreichen. Diese Aufgabe wird mittels einer Vorrichtung nach dem Anspruch 1 bzw. 2 und mittels eines Verfahrens nach dem Anspruch 10 bzw. 11 gelöst.

Die erfindungsgemäße Konstruktion erzeugt eine Durchwirbelung des Gegenstands innerhalb des Behältnisses, um dadurch ein besonders gleichmäßiges Erwärmen zu erreichen. Vorzugsweise wird ein frontal auf die Querschnittsfläche der Öffnung treffendes Fluid einer laminaren Strömung angenommen. Dem steht aber nicht entgegen, dass eine bereits turbulente Strömung mittels des mindestens einen Körpers zum Inneren des Behälters verstärkt oder verändert wird.

Mit dem Körper in Form eines Leitblechs soll im Inneren des Behältnisses eine turbulente Strömung gewährleistet werden, die den zu erhitzenden Gegenstand mitnimmt und zu einem gleichmäßigen Erhitzen führt. Entscheidend ist dabei, dass der Körper so angeordnet ist, dass sich die gewünschte Turbulenz im Behältnis einstellt. Der Körper kann hierzu vor der Öffnung, in der Öffnung oder auch etwas hinter der Öffnung vorgesehen sein. Der Körper ist als Leitblech ausgebildet, dass so angestellt ist, dass sich eine entsprechende turbulente Strömung ergibt. Es können mehrere Leitbleche vorgesehen sein, die zu chaotischen Strömungen innerhalb des Behältnisses führen können. Entscheidend ist in jedem Fall, dass die zumindest weitgehend laminare Strömung im Behältnis in einen oder mehrere Wirbel versetzt wird und auf diese Weise das Fluid den Gegenstand zumindest teilweise mit Wirbeln umspült und/oder den Gegenstand als Ganzes mitnimmt und in Rotation versetzt.

Der Körper kann unbeweglich mit dem Behältnis verbunden sein, oder zur Anpassung an unterschiedliche Erhitzungsaufgaben mit dem Behältnis so verbunden sein, dass er in seiner Position einstellbar ist. Der Körper kann Bestandteil des Behältnisses sein. Durch unterschiedliche Anstellungen des Leitblechs relativ zur ankommenden Strömung kann die Strömung im Behältnis beeinflusst werden. Profilierte Ausbildungen des Leitblechs können vorteilhaft sein, um die gewünschten Wirbel im Behältnis zu erzeugen. Das Profil bzw. die Querschnittsform kann sich über die Streckung des Leitblechs ändern, um eine geeignete Strömung im Behältnis zu erzeugen.

Des Weiteren ist es vorteilhaft, dass der mindestens ein Körper symmetrisch zu der Öffnung angeordnet ist. Die entstehenden Turbulenzen treten dadurch relativ gleichmäßig im Innenraum des Behältnisses auf. Im Sinne von symmetrisch wäre somit bei einem einzigen Körper eine zur Durchströmungsquerschnittsfläche, d.h. zur Querschnittsfläche der Öffnung, mittige Positionierung vorteilhaft und bei mehreren Körpern eine zur Durchströmungsquerschnittsfläche gleichartige Verteilung der einzelnen Körper.

Vorteilhafterweise ist das Behältnis ein Käfig, der zur Aufnahme des Gegenstands geeignet ist. Die Streben des Käfigs können so gewählt werden, dass sie den Gegenstand zuverlässig in dem Käfig halten.

Von Vorteil ist zudem die Verwendung von mindestens einem Einsatz, der kleinere Kammern zur Unterbringung von Gegenständen hat und in das Behältnis eingebracht werden kann. Solche Einsätze verhindern, dass kleine Gegenstände durch die entstehenden Turbulenzen im Behältnis unnötig stark beschleunigt, durch das gesamte Behältnis gewirbelt und womöglich gebrochen werden. Durch die räumliche Beschränkung auf die kleinen Kammern innerhalb der Einsätze kann dem Gegenstand entsprechend so viel Raum bemessen werden, dass dieser unbeschädigt bleibt, aber trotzdem durchwirbelt wird und an den Wänden der Fluidströmung ausgesetzt ist.

Eine Verbesserung der homogenen Erhitzung von Gegenständen, insbesondere Lebensmitteln in der Wanne, kann erzielt werden, in dem weiterhin Schallwellen auf das sich in der Wanne befindliche Fluid aufgebracht werden. Die der Erfindung zugrundeliegende Idee eine turbulente Fluidströmung zu schaffen, wird dadurch vorteilhaft. Zum Einbringen der Schallwellen sind jegliche Schallgeber grundsätzlich geeignet. An der Wandung der Wanne können Lautsprecher oder Resonatoren vorgesehen werden, es kann jedoch auch in die Wanne eine Lanze eingesetzt werden, deren Spitze in den Innenraum der Wanne und in das Fluid ragt und zum Erzeugen von Schallwellen geeignet ist. Besonders bewährt hat sich das Einsetzen von einer oder mehreren Ultraschalllanzen. Die optimale Anzahl der Schallgeber sowie deren Positionierung hängt auch vom zu erhitzenden Gegenstand ab.

Insbesondere vorteilhaft ist es, das eingangs genannte Behältnis durch eine Wanne zu bewegen. Auf diese Weise kann eine turbulente Durchströmung des Behältnisses alleine durch die Bewegung des Behältnisses innerhalb der Wanne erzeugt werden.

Es kann aber auch das Fluid selbst bewegt werden, beispielsweise durch eine Bewegungseinrichtung, die über eine Pumpe das Fluid in Bewegung versetzt. In diesem Fall können die Behältnisse selbst stationär bleiben, es ist aber auch denkbar, sowohl das Fluid als auch die Behältnisse durch die Wanne zu bewegen. Zur Erzeugung einer Fluidströmung durch die Wanne kann eine Leitung vorsehen sein, die von dem Innenraum der Wanne der zum Erhitzen des zu erhitzenden Gegenstandes verwendet wird, unabhängig ist, jedoch mit diesem verbunden ist. Auf diese Weise kann eine Zirkulation geschaffen werden, bei der das Fluid durch die Wanne strömt und durch die Leitung wieder zurückströmt, so dass sich ein geschlossener Kreislauf ergibt.

Zur Verbesserung der homogenen Erwärmung können Schallwellen, insbesondere Ultraschallwellen, in das Fluid eingebracht werden. Hierzu sind Schallgeber wie Lautsprecher oder Resonatoren geeignet. Die Frequenz des Schalls kann auf das zu erhitzende Gut eingestellt werden. Grundsätzlich ergibt sich bereits durch das Einbringen von Schallwellen auf das Fluid ein positiver Effekt, da die Turbulenz erhöht wird. Der optimale Frequenzbereich kann leicht durch Versuchsreihen herausgefunden werden.

Eine Anlage, die sich an unterschiedliche Erhitzungsaufgaben besonders gut anpassen lässt, verfügt optional über eine Einrichtung zur Einstellung der Temperatur des Fluids, sowie eine Einrichtung, mittels der die Relativbewegung zwischen Behältnissen und Fluid regelbar ist und des Weiteren Leitbleche zur Erzeugung der gewünschten turbulenten Strömung in den Behältnissen, deren Anstellwinkel einstellbar ist. Selbst mit einer Anlage mit feststehenden Leitblechen lässt sich durch die Relativgeschwindigkeit und die Temperatur des Fluids ein weiter Einsatz und Regelbereich schaffen.

Das Verfahren eignet sich besonders zum Garen von Lebensmitteln. Dabei wird wie folgt vorgegangen:
1. Einlegen des Garguts in ein Transportbehältnis, vorzugsweise Käfig.
2. Einbringen des Transportbehältnisses in eine Kochwanne.
3. Transportieren des Transportbehältnisses durch die Kochwanne.
4. Anströmen des Transportbehältnisses mit auf Gartemperatur gebrachtem Fluid gegen die Transportrichtung des Transportbehältnisses.
5. Umwandeln der Fluidströmung innerhalb des Transportbehältnisses mittels Leitblechen an dem Transportbehältnis in eine turbulente Strömung innerhalb des Transportbehältnisses, wodurch das Gargut während des Garprozesses bewegt und an den Innenwänden des Transportbehältnisses, vorzugsweise an den Streben des Käfigs, rundum massiert wird.
6. Entfernen des Transportbehältnisses nach der Garzeit.

Die Erfindung wird im Folgenden anhand eines Ausführungsbeispiels zum Garen von Lebensmitteln mit Bezugnahme auf die Zeichnungen näher erläutert, dabei zeigt
- Fig. 1: zwei Behältnisse mit jeweils einem Leitblech sowie einen Einsatz, der in das Behältnis zur Aufteilung des Garguts darin eingesetzt werden kann;
- Fig. 2: das Behältnis mit einem beispielhaft gezeigten, seitlich versetzten Leitblech sowie einem darin befindlichen Gargut, dass aufgrund von Turbulenz, die das Leitblech verursacht, rotiert, und
- Fig. 3: das Behältnis in einem Verfahren zum Garen eines darin befindlichen Garguts.
- Fig. 4: zeigt das Behältnis in einem Verfahren zum Garen eines darin befindlichen Garguts, bei dem weiterhin eine Ultraschalllanze zum Einsatz kommt.

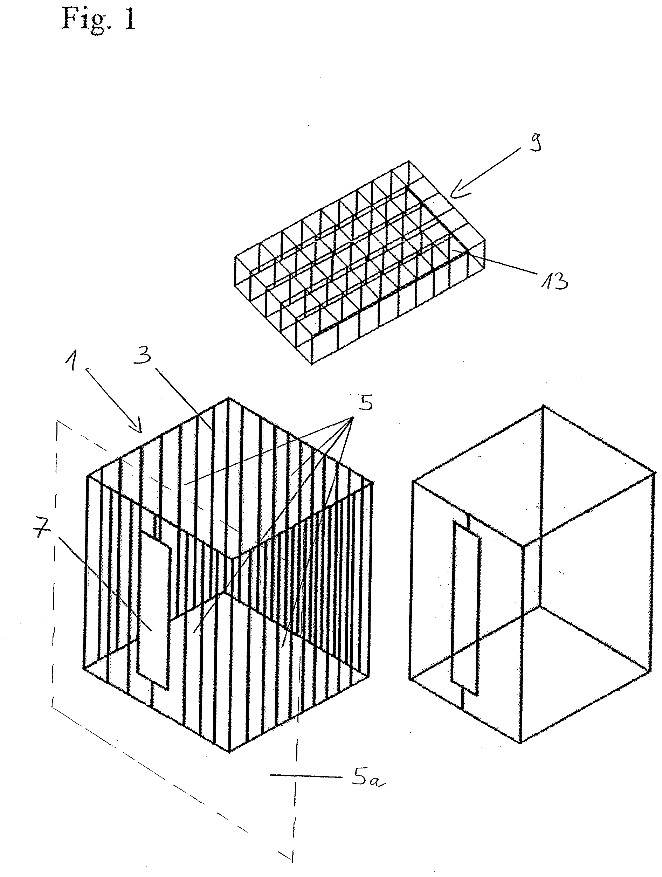

Das in Fig. 1, links unten auf dem Blatt, gezeigte Behältnis 1 ist ein Käfig 1 mit Streben 3. Dieser Käfig 1 hat somit Öffnungen 5, mittels derer er von einem Fluid durchströmt werden kann. Die Öffnungen 5 bezeichnen die gesamte jeweilige offene Seite des Käfigs 1, ohne Streben 3. Ein Körper 7, hier als Leitblech 7 bezeichnet, erstreckt sich quer über eine Öffnung 5, wodurch es in der Lage ist, aus einem auf die Öffnung 5 treffenden Fluid eine turbulente Fluidströmung im Inneren des Käfigs 1 zu erzeugen. Das Leitblech 7 ist unbeweglich mit dem Käfig 1 verbunden und symmetrisch zu der Öffnung 5 angeordnet, d.h. es erstreckt sich mittig in der Querschnittsfläche 5a der Öffnung 5 und ist parallel zu benachbarten Streben 3 des Käfigs 1.

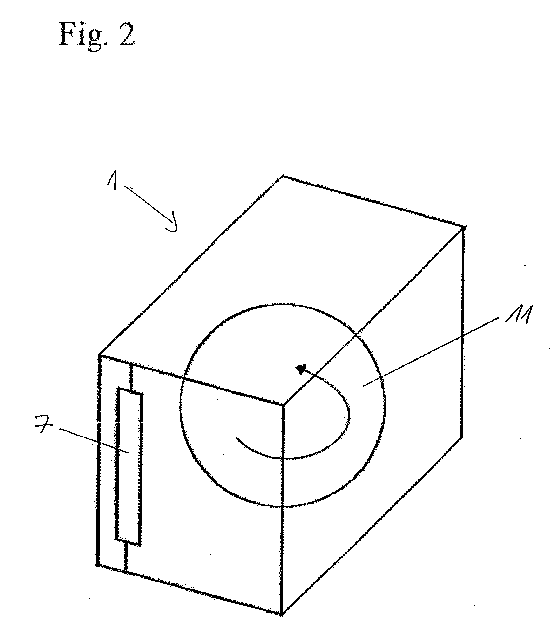

Fig. 1 zeigt rechts unten ein Behältnis 1, das zur Aufnahme eines in Fig. 1 oben gezeigten Einsatzes 9 dient und deshalb ohne Streben 3 auskommt. Der in Fig. 1 gezeigte Einsatz 9 nimmt ein Gargut als Gegenstand 11, siehe Fig. 2, auf und kann anschließend in das Behältnis 1 hineingebracht und daran befestigt werden. Es können mehrere Einsätze 9 in ein Behältnis 1 aufgenommen werden, wodurch mehrere kleinere fluiddurchlässige Kammern 13 zur Aufnahme von Gargut in dem Behältnis entstehen.

Fig. 2 zeigt beispielhaft ein Behältnis 1 mit einem seitlich versetzten Leitblech 7, dass eine Rotation eines in dem Käfig 1 befindlichen Garguts verursacht.

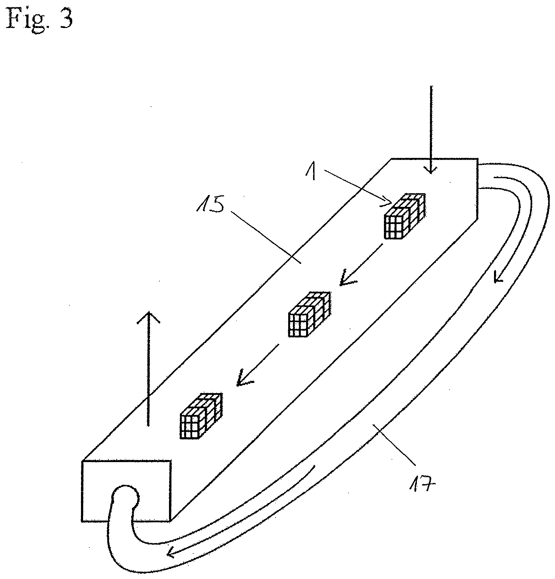

Fig. 3 zeigt die wesentlichen Merkmale eines erfindungsgemäßen Verfahrens, bei dem das in einem Käfig 1 befindliche Gargut mittels einer turbulenten Fluidströmung, hier einer Wasserströmung, im Inneren des Käfigs 1 gegart wird. In diesem Beispiel entspricht der Käfig 1 dem bereits erläuterten Käfig 1 zur Erzeugung einer turbulenten Fluidströmung. Es ist bei dem eingangs genannten Verfahren aber ebenso möglich die turbulente Strömung zu erzeugen, bevor das Fluid den Käfig 1 bzw. das Behältnis 1 erreicht hat. In dem gezeigten Ausführungsbeispiel der Fig. 3 wird der Käfig 1 durch eine Kochwanne 15 mit laminarer Wasserströmung 17 bewegt, die gegen die Bewegungsrichtung des Käfigs 1 gerichtet ist.

Das gewürzte und vorbereitete Gargut wird in hitzebeständigen durchfließbaren Einsätzen 9, welche in Käfige 1 eingeschoben bzw. eingehängt sind, durch die Produktionsstraße und die Kochwanne 15 gefördert. Die Käfige 1 sind mit Leitblechen 7 ausgestattet, welche aus einer gleichförmigen Durchströmung des Wasserbades eine Durchwirbelung des Wasserstromes erzeugen. Die dadurch erzeugte Bewegung und die gleichbleibende Temperatur des Gargutes führen zu einem besonders zarten Endprodukt. Die Temperaturen und die Dauer des Verbleibes im erhitzten Wasserstrom sind abhängig vom Rohprodukt. Die Temperaturen bewegen sich zwischen 55 und 90 Grad, die Zeiten zwischen 5 und 24 Stunden.

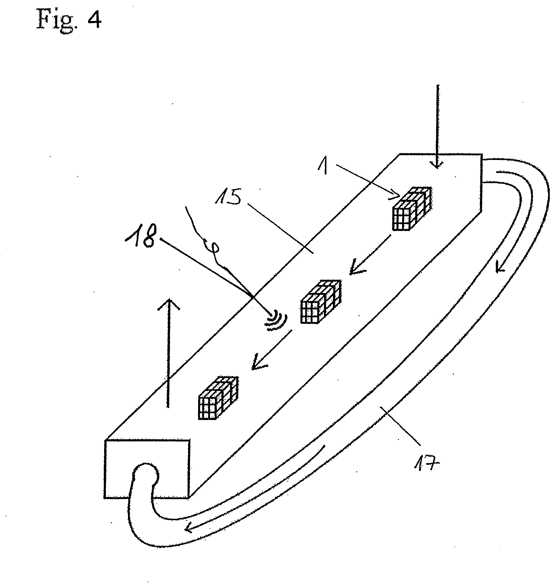

Fig. 4 zeigt den Einsatz einer Ultraschalllanze 18, diese wird in einen mittleren Bereich der Wanne 15 positioniert, so dass die Spitze der Lanze 18 in das Fluid ragt, jedoch die Bewegung der Käfige 1 nicht behindert. An der Spitze der Lanze 18 ist ein Schallgeber vorgesehen, der in diesem Fall Ultraschallwellen abgibt. Diese Schallwellen werden durch das Fluid übertragen und tragen zu einer homogenen Erwärmung des Garguts 1 bei.

## Patentansprüche

1. Erhitzungsvorrichtung zum Erhitzen von Gütern, insbesondere Lebensmitteln, mit einer Wanne (15), die ein erhitztes Fluid aufnimmt, wobei in dieser Wanne zumindest ein Behältnis (1) zur Aufnahme eines Gegenstandes (11) angeordnet ist, das mindestens zwei Öffnungen (5) aufweist, durch welche es von dem Fluid durchströmt werden kann, und mittels einer Bewegungseinrichtung eine Relativbewegung zwischen Behälter (1) und Fluid erzeugt wird, indem die Bewegungseinrichtung das Behältnis (1) durch das Fluid bewegt,
**dadurch gekennzeichnet, dass**
ein Körper (7) in Form eines Leitblechs im Bereich der Öffnung (5) angeordnet ist, um im Inneren des Behältnisses (1) eine turbulente Fluidströmung zu erzeugen.

2. Erhitzungsvorrichtung zum Erhitzen von Gütern, insbesondere Lebensmitteln, mit einer Wanne (15), die ein erhitztes Fluid aufnimmt, wobei in dieser Wanne zumindest ein Behältnis (1) zur Aufnahme eines Gegenstandes (11) angeordnet ist, das mindestens zwei Öffnungen (5) aufweist, durch welche es von dem Fluid durchströmt werden kann und mittels einer Bewegungseinrichtung eine Relativbewegung zwischen Behälter (1) und Fluid erzeugt wird,
**dadurch gekennzeichnet, dass**
die Bewegungseinrichtung das Fluid in Bewegung versetzt, und ein Körper (7) in Form eines Leitblechs im Bereich der Öffnung (5) angeordnet ist, um im Inneren des Behältnisses (1) eine turbulente Fluidströmung zu erzeugen.

3. Vorrichtung nach Anspruch 2, wobei vom Innenraum der Wanne (15) abgetrennt eine mit dem Innenraum der Wanne (15) verbundene Leitung vorgesehen ist, durch die Fluid strömt, sodass das Fluid durch den Innenraum der Wanne (15) strömt und durch die Leitung (17) zurückströmt.

4. Vorrichtung nach einem der Ansprüche 1 bis 3, wobei der mindestens eine Körper (7) in Form eines Leitblechs unbeweglich mit dem Behältnis (1) verbunden ist oder ein Teil des Behältnisses (1) ist.

5. Vorrichtung nach einem der Ansprüche 1 bis 4, wobei der mindestens eine Körper (7) in Form eines Leitblechs in seiner Position einstellbar ist.

6. Vorrichtung nach einem der Ansprüche 1 bis 5, wobei ein Schallgeber vorgesehen ist, der Schallwellen erzeugt, die auf das Fluid übertragen werden.

7. Vorrichtung nach Anspruch 6, wobei zumindest ein Schallgeber an einer Wand der Wanne (15) vorgesehen ist.

8. Vorrichtung nach Anspruch 6 oder 7, **dadurch gekennzeichnet, dass** zumindest ein Schallgeber im Innenraum der Wanne (15) vorgesehen ist.

9. Vorrichtung nach einem der Ansprüche 6 bis 8, wobei ein Schallgeber in Form einer Ultraschalllanze (18) in einem mittigen Bereich der Wanne (15) vorgesehen ist.

10. Erhitzungsverfahren zum Erhitzen von Gütern, insbesondere Lebensmitteln, bei dem eine Wanne (15) ein erhitztes Fluid aufnimmt, in dem die Güter erhitzt werden, wobei in dieser Wanne zumindest ein Behältnis (1) zur Aufnahme eines Gegenstandes (11) angeordnet wird, das mindestens zwei Öffnungen (5) aufweist, durch welche es von dem Fluid durchströmt wird, und mittels einer Bewegungseinrichtung eine Relativbewegung zwischen Behälter (1) und Fluid erzeugt wird, indem die Bewegungseinrichtung das Behältnis (1) durch das Fluid bewegt,
**dadurch gekennzeichnet, dass**
ein Körper (7) in Form eines Leitblechs im Bereich der Öffnung (5) angeordnet ist, und im Inneren des Behältnisses (1) mittels des Körpers (7) eine turbulente Fluidströmung erzeugt wird.

11. Erhitzungsverfahren zum Erhitzen von Gütern, insbesondere Lebensmitteln, bei dem eine Wanne (15) ein erhitztes Fluid aufnimmt, in dem die Güter erhitzt werden, wobei in dieser Wanne zumindest ein Behältnis (1) zur Aufnahme eines Gegenstandes (11) angeordnet wird, das mindestens zwei Öffnungen (5) aufweist, durch welche es von dem Fluid durchströmt wird, und mittels einer Bewegungseinrichtung eine Relativbewegung zwischen Behälter (1) und Fluid erzeugt wird, indem die Bewegungseinrichtung das Fluid in Bewegung versetzt,
**dadurch gekennzeichnet, dass**
ein Körper (7) in Form eines Leitblechs im Bereich der Öffnung (5) angeordnet ist, und im Inneren des Behältnisses (1) mittels des Körpers (7) eine turbulente Fluidströmung erzeugt wird.

12. Verfahren nach Anspruch 10 oder 11, wobei eine Fluidströmung durch die Wanne (15) und eine mit dem Innenraum der Wanne (15) verbundene Leitung geschaffen wird, so dass das Fluid durch den Innenraum der Wanne (15) strömt und durch die Leitung (17) zurückströmt.

13. Verfahren nach einem der Ansprüche 10 bis 12, wobei der Körper (7) in Form eines Leitblechs mittels einer Anstelleinrichtung in unterschiedliche Positionen bringbar ist.

14. Verfahren nach einem der Ansprüche 10 bis 13, wobei mittels eines Schallgebers Schallwellen auf das Fluid aufgebracht werden.

15. Verfahren nach Anspruch 14, wobei die Schallwellen durch Schallgeber an der Wand der Wanne (15) oder im Innenraum der Wanne (15) erzeugt werden.

## Claims

1. A heating device for heating goods, in particular foodstuffs, having a tub (15) that receives a heated fluid, wherein at least one container (1) for receiving an object (11) is arranged in this tub, said container having at least two openings (5), through which said object can be flowed through by a fluid, and by means of a movement device a relative movement between container (1) and fluid is generated, by means of having the movement device move the container (1) through the fluid, **characterized in that** a body (7) in the form of a baffle is arranged in the region of the opening (5) in order to generate a turbulent fluid flow in the interior of the container (1).

2. The heating device for heating goods, in particular foodstuffs, having a tub (15) that receives a heated fluid, wherein at least one container (1) for receiving an object (11) is arranged in this tub, said container having at least two openings (5), through which said object can be flowed through by a fluid, and by means of a movement device a relative movement between container (1) and fluid is generated, **characterized in that** the movement device sets the fluid in motion and a body (7) in the form of a baffle is arranged in the region of the opening (5) in order to generate a turbulent fluid flow in the interior of the container (1).

3. The device according to claim 2, wherein, separated from the interior of the tub (15), a conduit connected to the interior of the tub (15) is provided, through which the fluid flows so that the fluid flows through the interior of the tub (15) and flows back through the conduit (17).

4. The device according to any of claims 1 to 3, wherein the at least one body (7) in the form of a baffle is immovably connected to the container (1) or is a part of the container (1) .

5. The device according to any of claims 1 to 4, wherein the at least one body (7) in the form of a baffle is adjustable in its position.

6. The device according to any of claims 1 to 5, wherein a sound generator is provided that generates sound waves that are transferred to the fluid.

7. The device according to claim 6, wherein at least one sound generator is provided on a wall of the tub (15).

8. The device according to claim 6 or 7, **characterized in that** at least one sound generator is provided in the interior of the tub (15).

9. The device according to any of claims 6 to 8, wherein a sound generator in the form of a supersonic lance (18) is provided in a central region of the tub (15).

10. A heating method for heating goods, in particular foodstuffs, in which a tub (15) receives a heated fluid in which the goods are heated, wherein at least one container (1) is arranged in this tub for receiving an object (11) having at least two openings (5), through which said object can be flowed through by a fluid, and by means of a movement device a relative movement between container (1) and fluid is generated, by means of the movement device moving the container (1) through the fluid, **characterized in that** a body (7) in the form of a baffle is arranged in the region of the opening (5) in order to generate a turbulent fluid flow in the interior of the container (1) by means of the body (7).

11. A heating method for heating goods, in particular foodstuffs, in which a tub (15) receives a heated fluid in which the goods are heated, wherein at least one container (1) is arranged in this tub for receiving an object (11) having at least two openings (5), through which said object can be flowed through by a fluid, and by means of a movement device a relative movement between container (1) and fluid is generated, by means of the movement device setting the fluid in motion, **characterized in that** a body (7) in the form of a baffle is arranged in the region of the opening (5) in order to generate a turbulent fluid flow in the interior of the container (1) by means of the body (7).

12. The method according to claim 10 or 11, wherein a fluid flow through the tub (15) and a conduit connected to the interior of the tub (15) are created so that the fluid flows through the interior of the tub (15) and flows back through the conduit (17).

13. The method according to any of claims 10 to 12, wherein the body (7) in the form of a baffle can be brought into different positions by means of an adjusting device.

14. The method according to any of claims 10 to 13, wherein at least one sound generator applies sound waves to the fluid.

15. The method according to claim 14, wherein the sound waves are generated by sound generators on the wall of the tub (15) or in the interior of the tub (15).

## Revendications

1. Dispositif de chauffage destiné à chauffer des produits, en particulier des aliments, avec une cuve (15), qui loge un fluide chauffé, dans lequel au moins un récipient (1) destiné à loger un objet (11), qui présente au moins deux ouvertures (5) par lesquelles il peut être traversé par le fluide, est disposé dans cette cuve, et un déplacement relatif entre le récipient (1) et le fluide est produit au moyen d'un système de déplacement, du fait que le système de déplacement déplace le récipient (1) à travers le fluide,
**caractérisé en ce que**
un corps (7) sous forme d'une tôle de guidage est disposé dans la zone de l'ouverture (5), afin de produire un écoulement de fluide turbulent à l'intérieur du récipient (1).

2. Dispositif de chauffage destiné à chauffer des produits, en particulier des aliments, avec une cuve (15), qui loge un fluide chauffé, dans lequel au moins un récipient (1) destiné à loger un objet (11), qui présente au moins deux ouvertures (5) par lesquelles il peut être traversé par le fluide, est disposé dans cette cuve, et un déplacement relatif entre le récipient (1) et le fluide est produit au moyen d'un système de déplacement,
**caractérisé en ce que**
le système de déplacement amène le fluide en mouvement, et un corps (7) sous forme d'une tôle de guidage est disposé dans la zone de l'ouverture (5), afin de produire un écoulement de fluide turbulent à l'intérieur du récipient (1).

3. Dispositif selon la revendication 2, dans lequel une conduite par laquelle le fluide s'écoule, reliée à l'espace intérieur de la cuve (15), est prévue de manière séparée de l'espace intérieur de la cuve (15), de sorte que le fluide s'écoule à travers l'espace intérieur de la cuve (15) et reflue par la conduite (17).

4. Dispositif selon l'une quelconque des revendications 1 à 3, dans lequel l'au moins un corps (7) sous forme d'une tôle de guidage est relié de manière fixe au récipient (1) ou fait partie du récipient (1).

5. Dispositif selon l'une quelconque des revendications 1 à 4, dans lequel l'au moins un corps (7) sous forme d'une tôle de guidage peut être réglé dans sa position.

6. Dispositif selon l'une quelconque des revendications 1 à 5, dans lequel un générateur de son est prévu, qui produit des ondes sonores qui sont transmises sur le fluide.

7. Dispositif selon la revendication 6, dans lequel au moins un générateur de son est prévu sur une paroi de la cuve (15) .

8. Dispositif selon la revendication 6 ou 7, **caractérisé en ce qu'**au moins un générateur de son est prévu dans l'espace intérieur de la cuve (15).

9. Dispositif selon l'une quelconque des revendications 6 à 8, dans lequel un générateur de son est prévu sous forme d'une lance à ultrasons (18) dans une zone centrale de la cuve (15) .

10. Procédé de chauffage pour chauffer des produits, en particulier des aliments, selon lequel une cuve (15) loge un fluide chauffé, dans lequel les produits sont chauffés, dans lequel au moins un récipient (1) destiné à loger un objet (11), qui présente au moins deux ouvertures (5) par lesquelles il est traversé par le fluide, est disposé dans cette cuve, et un déplacement relatif est produit entre le récipient (1) et le fluide au moyen d'un système de déplacement, du fait que le système de déplacement déplace le récipient (1) à travers le fluide,
**caractérisé en ce que**
un corps (7) sous forme d'une tôle de guidage est disposé dans la zone de l'ouverture (5), et un écoulement de fluide turbulent est produit à l'intérieur du récipient (1) au moyen du corps (7).

11. Procédé de chauffage destiné à chauffer des produits, en particulier des aliments, selon lequel une cuve (15) loge un fluide chauffé, dans lequel les produits sont chauffés, dans lequel au moins un récipient (1) destiné à loger un objet (11), qui présente au moins deux ouvertures (5) par lesquelles il est traversé par le fluide, est disposé dans cette cuve, et un déplacement relatif est produit entre le récipient (1) et le fluide au moyen d'un système de déplacement, du fait que le système de déplacement amène le fluide en mouvement,
**caractérisé en ce que**
un corps (7) sous forme d'une tôle de guidage est disposé dans la zone de l'ouverture (5), et un écoulement de fluide turbulent est produit à l'intérieur du récipient (1) au moyen du corps (7).

12. Procédé selon la revendication 10 ou 11, dans lequel un écoulement de fluide à travers la cuve (15) et une conduite reliée à l'espace intérieur de la cuve (15) sont créés, de sorte que le fluide s'écoule à travers l'espace intérieur de la cuve (15) et reflue par la conduite (17).

13. Procédé selon l'une quelconque des revendications 10 à 12, dans lequel le corps (7) sous forme d'une tôle de guidage peut être amené dans différentes positions au moyen d'un dispositif de mise en place.

14. Procédé selon l'une quelconque des revendications 10 à 13, dans lequel des ondes sonores sont appliquées sur le fluide au moyen d'un générateur de son.

15. Procédé selon la revendication 14, dans lequel les ondes sonores sont produites par le générateur de son sur la paroi de la cuve (15) ou dans l'espace intérieur de la cuve (15) .
